Europäisches Patentamt

European Patent Office

Office européen des brevets

(19)

(11) EP 0 767 896 B1

(12) EUROPÄISCHE PATENTSCHRIFT

(45) Veröffentlichungstag und Bekanntmachung des Hinweises auf die Patenterteilung:
**18.11.1998 Patentblatt 1998/47**

(21) Anmeldenummer: **95924832.9**

(22) Anmeldetag: **27.06.1995**

(51) Int Cl.⁶: **G01F 1/66**

(86) Internationale Anmeldenummer:
**PCT/DE95/00817**

(87) Internationale Veröffentlichungsnummer:
**WO 96/00375 (04.01.1996 Gazette 1996/02)**

(54) **ULTRASCHALL-DURCHFLUSSMESSER MIT KONTINUIERLICHER NULLFLUSS-KALIBRIERUNG**

ULTRASONIC FLOWMETER WITH CONTINUOUS ZERO FLOW CALIBRATION FACILITY

DEBITMETRE ULTRASONORE A ETALONNAGE CONTINU SUR ECOULEMENT ZERO

(84) Benannte Vertragsstaaten:
**GB**

(30) Priorität: **27.06.1994 DE 4422367**

(43) Veröffentlichungstag der Anmeldung:
**16.04.1997 Patentblatt 1997/16**

(73) Patentinhaber: **SIEMENS AKTIENGESELLSCHAFT 80333 München (DE)**

(72) Erfinder: **RUSSWURM, Winfried D-93049 Regensburg (DE)**

(56) Entgegenhaltungen:
**WO-A-91/14925          WO-A-93/03334
DE-A- 3 146 477**

**Beschreibung**

Die Erfindung bezieht sich auf einen Ultraschall-Durchflußmesser gemäß dem Oberbegriff des Anspruchs 1. Weiterhin bezieht sich die Erfindung auf ein Verfahren zur Ultraschall-Durchflußmessung gemäß dem Oberbegriff des Anspruchs 18. (WO-A-93/03334)

Aus der DE-OS 31 46 477 ist ein Ultraschall-Durchflußmesser mit einem von einem Medium durchströmbaren Strömungskanal und mit zwei Ultraschall-Sende-/Empfangswandlern bekannt, die den Strömungskanal entlang eines vorgegebenen ersten Ultraschallweges abwechselnd mit einem Ultraschallsignal durchschallen, wobei außer dem Strömungskanal ein Nullfluß-Meßkanal vorgesehen ist.

Aus der DE-OS 40 10 148 ist ein Ultraschall-Durchflußmesser bekannt und dort in FIG 10 abgebildet. Das einen Strömungskanal bildende Meßrohr, das von Gas oder Flüssigkeit durchströmt wird, hat im Bereich der Ultraschall-Durchflußmessung einen rechteckigen Querschnitt. Der zur Durchflußmessung verwendete Ultraschall nimmt einen W-förmigen Ultraschallweg mit insgesamt drei Reflexionen des Ultraschalls an den Seitenwänden des Meßrohrs. Zwei Ultraschall-Sende-/Empfangswandler sind an ein und derselben Seitenwand derart schräg angebracht, daß sich der W-förmige Ultraschallweg ergibt.

Mit dem Ultraschall-Durchflußmesser wird die Laufzeit des Ultraschalls sowohl in Richtung als auch gegen die Richtung der Strömung des Gases bzw. der Flüssigkeit gemessen. Die Differenz beider Schallaufzeiten T1,T2 ist proportional zur Strömungsgeschwindigkeit v, wobei T1 die Schallaufzeit entgegen der Richtung der Strömung und T2 die Schallaufzeit in Richtung der Strömung ist:

$$v \sim \frac{T1 - T2}{T1 \cdot T2}$$

Die Ermittlung der Strömungsgeschwindigkeit v ist hierbei schallgeschwindigkeitsunabhangig. Bei ruhender Strömung sollte die Differenz im Zähler verschwinden. In der Praxis allerdings ist das nicht ganz der Fall. Es ergibt sich hier ein von Wandlerexemplar zu Wandlerexemplar unterschiedlicher, von Null verschiedener, als "Nullfluß" bezeichneter Wert. Dadurch wird die Meßgenauigkeit bei geringen Durchflüssen beeinflußt. Der hierdurch bedingte systematische Fehler kann mehrere Prozent betragen und ändert sich mit Temperatur, Medium und anderen Einflüssen. Deshalb muß dieser Nullflußfehler entweder systematisch behoben, minimiert oder korrigiert werden.

Bisher hat man zur Lösung dieses Problems folgende Maßnahmen ergriffen:

- Weitgehende Erfüllung des Reziprozitätstheorems;
- Paarweise Selektion der Ultraschallwandler nach geeigneten Kriterien;
- Bestückung der Elektronik des Ultraschall-Durchflußmessers mit ausgesuchten und gepaarten Bauteilen;
- Messung der Nullflußwerte unter verschiedenen Bedingungen, wie z.B. den Medien und der Temperatur am Herstellort und Korrektur dieser Werte durch Zurückschreiben in ein Register des Durchflußmessers.

Die ersten drei Maßnahmen dienen hauptsächlich der Minimierung des Nullflusses. Der restlich auftretende Effekt wird mit der letzten Maßnahme auf ein für die Messung erträgliches Maß reduziert.

Die zuletzt genannte Maßnahme ist sehr aufwendig und sollte möglichst vermieden oder minimiert werden. Zudem kann der Nullfluß nur über sehr wenige Betriebsparameter korrigiert werden. Es bleibt damit eine Unsicherheit hinsichtlich anderer Betriebsparameter, insbesondere Temperatur, Druck, Alterung, unterschiedlicher Medien, Verschmutzung, etc.

Weiterhin ist nach gegenwärtigem Kenntnisstand bekannt, daß der Nullfluß durch die beiden folgenden Faktoren verursacht wird:

- Unsymmetrien in der Auswerteelektronik, soweit diese nicht vollständig einpfadig aufgebaut werden kann,
- die Reziprozität gilt vollständig nur für lineare Elemente.

Die an der Übertragung beteiligten Ultraschallwandler sind nichtlineare Elemente, so daß selbst bei optimal reziprokem Abschluß die unterschiedlichen Resteigenschaften der beiden Wandler den Nullfluß verursachen. Der reziproke Abschluß muß in jedem Falle erhalten bleiben, da der Nullflußeffekt sowohl Größenordnungen größer sein kann, als auch viel mehr Einflüssen unterworfen ist.

Die Resteigenschaften der einzelnen Ultraschallwandler können nach heutigem Stand nicht so bestimmt werden, daß eine exakte Paarselektion für verschwindenden Nullfluß möglich ist.

Außerdem hängt nach bisherigen Erkenntnissen der Nullfluß von der verwendeten Elektronik zur Erzeugung und Auswertung der Ultraschallsignale sowie von den Eigenschaften der Ultraschallwandler ab, nicht jedoch von den Eigenschaften des Meßrohrs, sofern keine parasitären Einflüsse einwirken, wie Körperschall, Fremdschall oder auch Hochfrequenzeinstreuungen.

Die aus der DE-OS 31 46 477 bekannte Meßanordnung ist relativ aufwendig, wobei vor der Inbetriebnahme aufgrund der Wandlerausstattung ein hoher Kalibrieraufwand zu erwarten ist.

Der Erfindung liegt die Aufgabe zugrunde, einen Ultraschall-Durchflußmesser der oben genannten Art dahingehend zu verbessern, daß auf einfache Weise Nullflußfehler korrigiert werden. Weiterhin soll ein einfaches Verfahren zur Ultraschall-Durchflußmessung geschaffen werden, bei dem Nullflußfehler korrigiert werden.

Erfindungsgemäß wird die erste Aufgabe mit einem Ultraschall-Durchflußmesser gemäß den Merkmalen des Anspruchs 1 gelöst.

Diese Lösung ist sehr einfach, wobei der Aufwand für Wandler und deren Kalibrierung gering ist. Die erfindungsgemäße Lösung ermöglicht eine Nullflußmessung bei jeder Strömungsmessung ohne Abschaltung der Strömung. Somit kann das Ergebnis der Nullflußmessung sofort in das Ergebnis der Strömungsmessung eingerechnet werden. Es läßt sich sofort jede Veränderung der Bedingungen für die Nullflußmessung, d.h. Temperatur, Medium und Alterung, erfassen und richtig korrigieren. Auch die meisten Nullflußeinflüsse werden mit Hilfe dieser Anordnung erfaßt.

Eine vorteilhafte Weiterbildung der Erfindung besteht, wenn die Ultraschall-Sende-/Empfangswandler den Nullfluß-Meßkanal entlang eines derart angepaßten zweiten Ultraschallweges durchschallen, daß der jeweilige Ultraschall-Empfangswandler die beiden Ultraschallsignale nacheinander empfängt. Die beiden Ultraschallwege sind dazu in ihrer Länge entsprechend bemessen. Dies bedeutet, daß die beiden empfangenen Ultraschallsignale deutlich zeitlich voneinander separiert sind und sich demnach die Ultraschall-Laufzeiten in den beiden Kanälen von der Elektronik unterscheiden und auswerten lassen. Die Elektronik zur Erzeugung, zum Empfang und zur Auswertung der Ultraschallsignale ist mit den Ultraschallwandlern verbunden.

Eine Nullflußkalibrierung, wie eingangs erwähnt, ist damit nicht mehr notwendig. Die Strömungsgeschwindigkeit v im Strömungskanal läßt sich um den ermittelten Nullflußwert, z.B. entsprechend der folgenden Gleichung, korrigieren:

$$v \sim \frac{T1a - T2a - T1b + T2b}{T1a \cdot T2a}$$

T1: Ultraschall-Laufzeit entgegen der Strömungsrichtung
T2: Ultraschall-Laufzeit in Strömungsrichtung
a: Messung im Strömungskanal
b: Messung im Nullfluß-Meßkanal

Vorteilhafte Weiterbildungen der Erfindung sind den Unteransprüchen zu entnehmen.

Eine besonders günstige Anordnung ergibt sich, wenn der erste Ultraschallweg W-förmig verläuft, und wenn der zweite Ultraschallweg, z.B. mittels Reflexionen, weitgehend direkt und geradlinig verläuft, wobei der erste Weg ggf. länger als der zweite ist. Hiermit wird auf einfache Weise eine ausreichende Separation der empfangenen Ultraschallsignale erreicht.

Für den Gas- oder Flüssigkeitsaustausch ist es zweckmäßig, wenn der Nullfluß-Meßkanal parallel zum Strömungskanal liegt. Hierdurch ist die Möglichkeit einer weiteren vorteilhaften Weiterbildung der Erfindung gegeben, bei der der Strömungskanal und der Nullfluß-Meßkanal durch eine gemeinsame Trennwand voneinander getrennt sind, und bei der nur im Bereich der Ultraschallwandler für das Medium eine Durchlässigkeit zwischen dem Strömungskanal und dem Nullfluß-Meßkanal besteht.

Bei einer weiteren vorteilhaften Ausführungsform ist der Nullfluß-Meßkanal dicht, und der Übergang des Mediums zwischen dem Strömungskanal und dem Nullfluß-Meßkanal erfolgt durch Diffusion.

Ein besonders schneller Austausch des Mediums im Nullfluß-Meßkanal läßt sich erreichen, wenn der Strömungskanal und der Nullfluß-Meßkanal an den Ultraschall-Sende-/Empfangswandlern voneinander getrennt sind und wenn die beiden Kanäle in einer mit dem Medium gefüllten Box eingeschlossen sind und zudem der Nullfluß-Meßkanal gegenüber der Umgebung stromauf und stromab in Bezug auf die Strömungsrichtung des Mediums im Strömungskanal offen ist. Dies hat den Vorteil, daß bei Änderung des Mediums ein schneller Austausch erfolgt und der Ultraschall-Durchflußmesser für die eigentliche Messung sehr schnell einsatzbereit ist. Allerdings ist hier durch entsprechende konstruktive Maßnahmen für einen geringen Durchfluß im Nullfluß-Meßkanal zu sorgen.

Eine weitere vorteilhafte Ausführungsform besteht darin, daß der Nullfluß-Meßkanal nur an einer Stelle gegenüber der Umgebung offen ist. Dies bietet sich insbesondere für die Messung größerer Strömungsgeschwindigkeiten an, bei denen ein an beiden Enden geöffneter Nullfluß-Meßkanal zu unzulässig hohen Durchflüssen auch im Nullfluß-Meßkanal führen würde.

Diesem Problem könnte aber auch durch eine Ausbildung der Erfindung begegnet werden, bei der der Nullfluß-Meßkanal vollständig gegenüber der Umgebung geschlossen ist und die Trennwand zwischen beiden Kanälen zumindest teilweise aus einem porösem Material oder aus einer Membran besteht. Hier erfolgt der Gas- bzw. Flüssigkeitsaustausch lediglich durch Diffusion durch die Trennwand. Als Material für die Trennwand kann hier z.B. PTFE-Folie verwendet werden. Damit kann der Gasaustausch sowohl durch Diffusion bei sehr geringen Durchflüssen als auch durch einen sehr geringen Fluß durch die Membran, bei höheren Flüssen aufgrund der Druckdifferenz, erreicht werden.

Besteht die Trennwand in dem Bereich, der beide Kanäle an den Ultraschallwandlern voneinander trennt, aus einer Membran, so ergibt sich der Vorteil, daß die Körperschalleinkopplung durch die Verwendung des porösen Materials verringert wird.

Bei einer weiteren Ausführungsform ist im Nullfluß-Meßkanal mindestens zwei Öffnungen derart angeordnet, daß der Nullfluß-Meßkanal vom Medium quer zur Ultraschallführung im Nullfluß-Meßkanal durchströmt wird. Dies läßt sich durch geeignete konstruktive Maßnahmen in der den Ultraschall-Durchflußmesser umgebenden Gesamtbox erreichen. Der Fluß kann dabei so eingestellt werden, daß einerseits z.B. ein schneller Gasaustausch erfolgt und andrerseits die Nullmessung nicht gestört wird. Die Anordnung ist besonders vorteilhaft, weil die Gasaustauschströmung rechtwinklig zur Durchschallung erfolgt, d.h. die Strömung erzeugt keine strömungsgeschwindigkeitsabhängige Differenz der Laufzeiten.

Die weitere, verfahrensbezogene Aufgabe wird erfindungsgemäß mit einem Verfahren gemäß den Merkmalen des Anspruchs 18 gelöst. Die obengenannten und nachfolgenden Vorteile gelten für das Verfahren sinngemäß.

Gemäß einer vorteilhaften Weiterbildung des Verfahrens ist vorgesehen, daß aufgrund unterschiedlich langer Ultraschallwege im Strömungskanal und im Nullfluß-Meßkanal der jeweils empfangende Ultraschall-Sende-/Empfangswandler die sich darin ausbreitenden Ultraschallsignale nacheinander empfängt.

Mit Vorteil wird in einem der Kanäle das Ultraschallsignal reflektiert, so daß der Ultraschallweg verlängert ist. Dadurch sind die beiden Signale separierbar.

Mit Vorteil kann der Nullfluß-Meßkanal mit dem gleichen Medium wie der Strömungskanal gefüllt sein, wobei das Medium im Nullfluß-Meßkanal praktisch ruht. Die beiden Kanäle können alternativ auch mit unterschiedlichen Medien gefüllt sein.

Ausführungsbeispiele der Erfindung werden im folgenden anhand einer Zeichnung näher erläutert. Es zeigen:

FIG 1    Die parallele Anordnung eines Strömungskanals und eines Nullfluß-Meßkanals mit Überdeckung durch zwei Ultraschall-Wandler,

FIG 2    eine von den wahren Verhältnissen abweichende, lediglich der besseren Anschauung dienende Darstellung beider Kanäle einschließlich der Schallführung,

FIG 3    die zeitliche Separation der vom empfangenden Ultraschall-Sende-/Empfangswandler empfangenen Ultraschallsignale aus dem Nullfluß-Meßkanal und dem Strömungskanal,

FIG 4    eine Trennwand zwischen beiden Kanälen gemäß FIG 1 mit einem Spalt zum Ultraschallwandler,

FIG 5    eine Anordnung mit einer direkt am Ultraschallwandler abschließenden Trennwand mit Öffnungen des Nullfluß-Meßkanals stromaufwärts und stromabwärts,

FIG 6    eine Anordnung mit einer am Ultraschallwandler direkt abschließenden Trennwand und lediglich einer Öffnung zum Gasaustausch im Nullfluß-Meßkanal,

FIG 7    eine Anordnung mit vollständig geschlossenem Nullfluß-Meßkanal, bei der die Trennwand aus einer Membrane oder aus porösem Material besteht,

FIG 8    eine Anordnung mit einer Trennwand gemäß FIG 1, die lediglich im Bereich des Ultraschallwandlers als Membran ausgeführt ist,

FIG 9    eine Anordnung mit einem Nullfluß-Meßkanal mit Öffnungen zum Mediumaustausch senkrecht zur Ultraschallführung,

FIG 10    einen Strömungskanal gemäß dem Stand der Technik, z.B. gemäß der DE-OS 39 41 546.

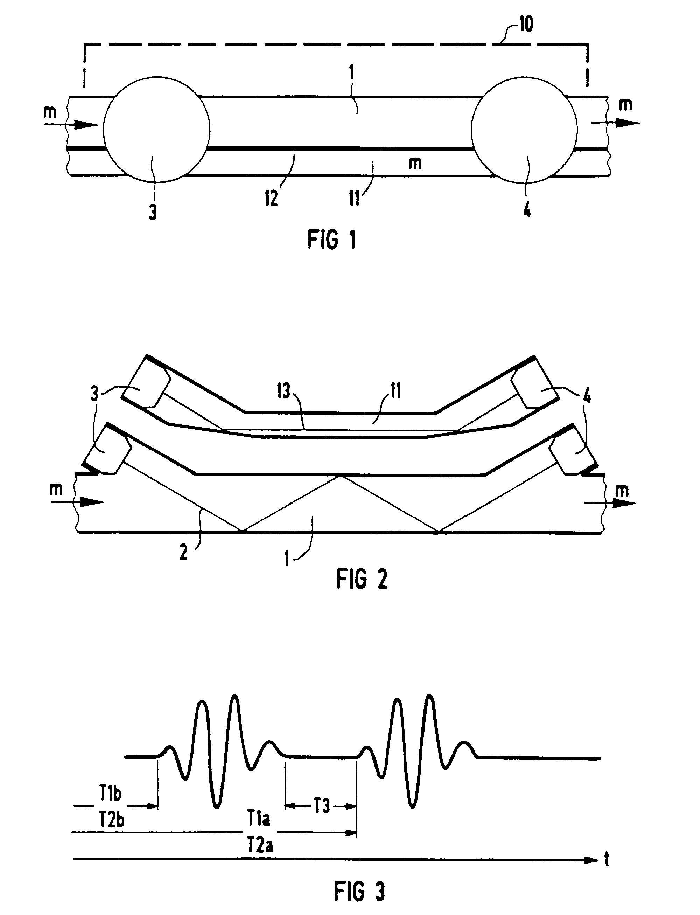

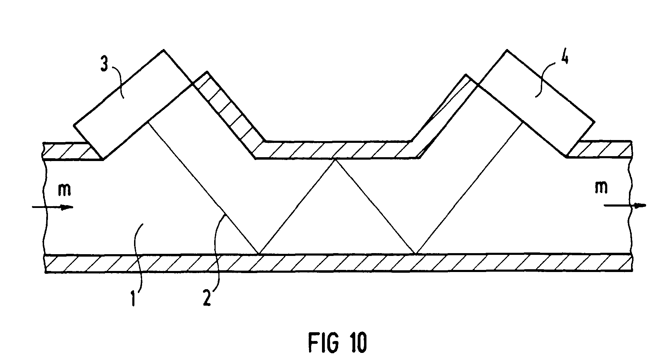

Gemäß der Erfindung ist parallel zum Strömungskanal 1 des bekannten Ultraschall-Durchflußmessers gemäß FIG 10 ein Nullfluß-Meßkanal 11 vorgesehen (siehe FIG 1). Bei dem schon bekannten, hier als Beispiel dienenden Ultraschall-Durchflußmesser sind zwei Ultraschall-Sende-/Empfangswandler 3,4 an der (oberen) Seitenwand eines Meßrohrs angebracht, welches den Strömungskanal 1 bildet. Die beiden Ultraschall-Sende/Empfangswandler 3,4 durchschallen den Strömungskanal 1 in dieser beispielhaften Ausführung abwechselnd auf einem W-förmigen Ultraschallweg 2, der deutlich länger ist als die direkte Strecke zwischen beiden Wandlern 3,4.

Der Strömungskanal 1 ist hier relativ schmal ausgebildet und wird durch entsprechend ausgewählte Wandler 3,4 mit großem Durchmesser sehr gut überdeckt, was eine sehr gute Durchschallung des Strömungskanals 1 mit Ultraschall zur Folge hat. Dies ist eine der Hauptursachen für die hervorragende Meßlinearität des verwendeten Meßrohrs.

Das Meßrohr steht im allgemeinen nicht direkt mit der Umgebung in Verbindung, sondern befindet sich in einer zeichnerisch nicht dargestellten Stahlbox, die für das Meßrohr unter anderem Einlaßvolumina bereitstellt. Die Stahlbox ist komplett mit dem Medium Gas oder Flüssigkeit gefüllt, dessen Strömungsgeschwindigkeit gemessen werden soll. Aus dem in der Box enthaltenen Vorrat strömt das Medium m in das Meßrohr und von dort in einen Auslaß, der jedoch vom Einlaßvolumen dicht getrennt ist. Soweit ist der Ultraschall-Durchflußmesser bekannt und bedarf keiner näheren Darstellung.

Die beiden parallel angeordneten Kanäle 1,11 besitzen im vorliegenden Ausführungsbeispiel nach FIG 1 eine gemeinsame Trennwand 12. Die Ultraschall-Sende-/Empfangswandler 3,4 sind - wie im Stand der Technik - schräg an einer Seitenwand des Strömungskanals 1 angebracht und durchschallen den Strömungskanal 1 nicht nur auf dem W-förmigen Ultraschallweg 2, sondern zugleich auch den Nullfluß-Meßkanal 11, den sie gemäß FIG 1 ebenfalls überdecken. Dabei wird der eigentliche Strömungskanal 1 ebenfalls sehr gut durchschallt. Der Nullfluß-Meßkanal 11 enthält das gleiche Medium m wie der Strömungskanal 1, wobei das Medium m hier allerdings zumindest in bezug auf die Durchschallung nahezu ruht. Die Durchschallung im Nullfluß-Meßkanal 11 geschieht nicht W-förmig, sondern mittels zweier Reflexionen annähernd direkt (siehe FIG 2), so daß der Abstand der beiden Ultraschall-Sende-/Empfangswandler 3,4 praktisch den effektiven Ultraschallweg 13 im Nullfluß-Meßkanal 11 darstellt. Damit ergibt sich im Vergleich zum W-förmigen Ultraschallweg 2 eine deutlich kürzere Ultraschall-Laufzeit T2. Die Qualität der Durchschallung des Nullfluß-Meßkanals 11 ist nicht besonders kritisch. Die Impulsform und der Empfangspegel der Ultraschallsignale im Strömungskanal 1 und im Nullfluß-Meßkanal 11 sind etwa gleich. Eine Box ist mit 10 bezeichnet.

Zur besseren Veranschaulichung der Anordnung sind die an beiden Enden des Meßrohrs angebrachten Ultraschall-Sende-/Empfangswandler 3 und 4 gemäß FIG 2 übereinander dargestellt, d.h. die die Kanäle 1,11 durchschallenden Wandlerflächen auf der Sende- und Empfangsseite gehören jeweils zu demselben Ultraschallwandler 3 oder 4. FIG 2 verdeutlicht, daß im Strömungskanal 1 eine W-förmige Durchschallung erfolgt, während der Ultraschallweg 13 im Nullfluß-Meßkanal 11 direkt bzw. geradlinig ist (bis auf die beiden erwähnten Reflexionen).

Der jeweils sendende Ultraschallwandler 3 oder 4 sendet einen Ultraschallimpuls aus, der sich gleichzeitig in beiden Kanälen 1,11 fortpflanzt. Aufgrund der kürzeren Schallaufzeit T2b im Nullfluß-Meßkanal 11 gegenüber der Ultraschall-Laufzeit T2a entlang dem W-förmigen Ultraschallweg 2 wird der Impuls aus dem Nullfluß-Meßkanal 11 vom empfangenden Ultraschallwandler 4 bzw. 3 zuerst empfangen. Danach wird der empfangende Ultraschallwandler 3,4 das Ultraschallsignal vom Strömungskanal 1 empfangen, wie in FIG 3 dargestellt. Beide Signale sind zeitlich voneinander separiert und damit getrennt auswertbar. Besonders wichtig und grundlegend ist die Voraussetzung, daß die beiden Ultraschallsignale in den Kanälen 1,11 von ein und demselben Paar von Ultraschall-Sende-/Empfangswandlern 3,4 erzeugt und empfangen werden und auch von der gleichen, mit den Ultraschallwandlern 3,4 verbundenen Elektronik ausgewertet werden. Gemäß FIG 3, worin die vom Wandler 3 oder 4 empfangenen Ultraschallsignale in den beiden Kanälen 1,11 über der Zeit t beispielhaft dargestellt sind, ergibt sich eine Separationszeit T3, deren Dauer von folgenden Einflußgrößen abhängt:

- Länge des Meßrohrs
- Höhe des Meßrohrs
- Schallgeschwindigkeit des Mediums
- Flußgeschwindigkeit im Strömungskanal
- Ausprägung des Nullfluß-Meßkanals.

Die Qualität der Separation hängt im wesentlichen von der Anstiegs- und Abfallzeit der beteiligten Ultraschallsignale, d.h. der Wandlerausklingzeit und dem akustischen "Nachklappern" aufgrund der Körperschallübertragung durch das Meßrohr sowie von weiteren möglicherweise beteiligten parasitären Signalen ab.

Die die empfangenen Ultraschallsignale auswertende Elektronik hat demzufolge gegenüber einer herkömmlichen Elektronik zusätzlich die Aufgabe zu bewältigen, zwei in kurzer Folge eintreffende Ultraschallsignale zu bearbeiten und beide Schallaufzeiten T1a,T1b bzw. T2a,T2b zu messen.

Zur Wirkungsweise des vorliegenden Prinzips, mit einem zusätzlichen Nullfluß-Meßkanal eine kontinuierliche Nullfluß-Kalibrierung zu erreichen, wird folgendes ausgeführt:

Nach dem vorliegenden Kenntnisstand kann davon ausgegangen werden, daß der Nullfluß im wesentlichen von der Elektronik und den Ultraschallwandlern verursacht wird. Der Nullfluß-Meßkanal 11 mißt mit Hilfe der für die Strömungsmessung im Strömungskanal 1 verwendeten Ultraschallwandler 3,4 und der Elektronik den Nullflußeffekt in einem nicht durchströmten Kanal. Damit ist eine simultane Nullflußmessung bei jeder Strömungsmessung ohne Abschaltung der Strömung möglich. Das Ergebnis der Nullflußmessung kann also sofort in das Ergebnis der Strömungsmessung eingerechnet werden. Jede Veränderung der Bedingungen für die Nullflußmessung (Temperatur, Medium, Alterung) wird dabei sofort erfaßt und richtig korrigiert. Weiterhin werden bei dieser Methode auch die meisten Nullfluß-Einflüsse der Elektronik erfaßt. Eine Nullfluß-Kalibrierung ist damit nicht mehr notwendig. Die Korrektur der Strömungsgeschwindigkeit v im Strömungskanal 1 bzgl. des Nullflußwerts kann z.B. in folgender Weise erfolgen:

$$v \sim \frac{T1a - T2a - T1b + T2b}{T1a \cdot T2a}$$

T1:    Schallaufzeit entgegen der Strömungsrichtung
T2:    Schallaufzeit in Strömungsrichtung
a:     Messung im Strömungskanal
b:     Messung im Nullfluß-Meßkanal

Wichtig ist die Tatsache, daß das Medium im Nullfluß-Meßkanal 11 keiner nennenswerten Strömung ausgesetzt ist, aber stets dafür gesorgt wird, daß das Medium im Nullfluß-Meßkanal 11 das gleiche ist wie das im Strömungskanal 1 zu messende, auch wenn letzteres ausgetauscht wird. Hierzu sind die folgenden Ausbildungen der Meßanordnung vorgesehen. Hier und im folgenden sind gewisse Maßnahmen nur am linken Ende des Durchflußmessers gezeigt. Da sie jedoch symmetrisch auch am rechten Ende durchgeführt werden, ist der gezeigte Wandler jeweils mit 3,4 bezeichnet. Der Wandler 3,4 ist jeweils abgedichtet gehalten, was durch einen eingezeichneten O-Ring symbolisiert ist.

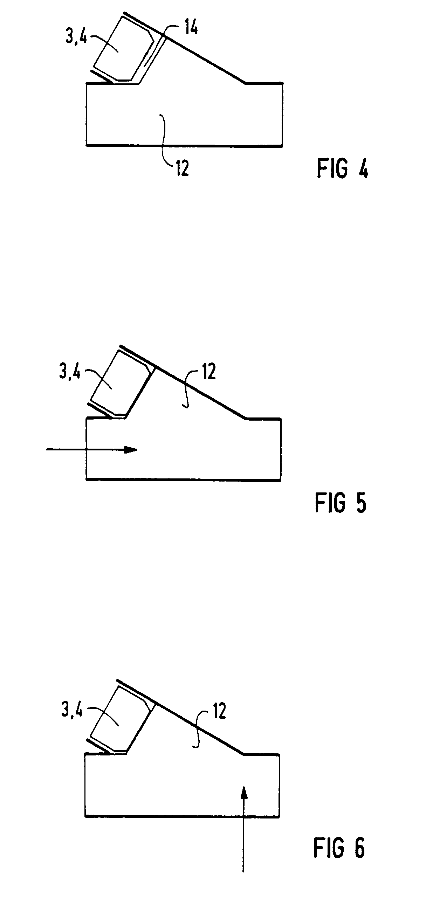

Gemäß FIG 4 ist der Strömungskanal 1 mit dem Nullfluß-Meßkanal 11 nur an den Stellen verbunden, an denen sich die Ultraschall-Sende-/Empfangswandler 3,4 befinden. Ansonsten ist der Nullfluß-Meßkanal 11 geschlossen. Beide Kanäle 1,11 sind durch die Trennwand 12 voneinander getrennt, die zu den Ultraschallwandlern 3,4 einen Spalt 14 aufweist. Durch Vorgabe der Breite des Spaltes 14 kann bestimmt werden, ob und wieviel Gas oder Flüssigkeit vom Strömungskanal 1 in den Nullfluß-Meßkanal 11 eindringen soll. Der Fluß durch den Nullfluß-Meßkanal 11 kann dabei so klein gemacht werden, daß er für die v-Messung einen zu vernachlässigenden Fehler darstellt. Wird der Spalt 14 verkleinert und damit der Nullfluß-Meßkanal 11 entsprechend abgedichtet, kann die Geschwindigkeit des Austausches des Mediums m zwischen beiden Kanälen 1,11 soweit reduziert werden, daß der Austausch einer Diffusion entspricht. Ein geringer Spalt 14 zwischen den Ultraschallwandlern 3,4 und der Trennwand 12 hat weiterhin den Vorteil, daß eine Körperschalleinkopplung, z. B. über das Meßrohr, gering gehalten wird.

Gemäß dem Ausführungsbeispiel nach FIG 5 sind der Strömungskanal 1 und der Nullfluß-Meßkanal 11 an den Ultraschallwandlern 3,4 voneinander getrennt. Der Nullfluß-Meßkanal 11 ist aber in geeigneter Weise gegenüber der Umgebung stromauf und stromab in Bezug auf die Richtung der Strömung im Strömungskanal 1 offen. Dabei wird von der Tatsache Gebrauch gemacht, daß sich die eigentliche Meßzelle, d.h. das Meßrohr mit den beiden Kanälen 1,11, innerhalb einer umhüllenden Stahlbox befindet. Damit ist der Durchfluß durch den Nullfluß-Meßkanal 11 kollinear mit dem im Strömungskanal 1. Er wird durch die Druckdifferenz zwischen beiden Öffnungen innerhalb der Stahlbox zur Zu- und Abführung bestimmt. Der dabei erreichte Durchfluß ist aber so einzustellen, daß die eigentliche Strömungsmessung nur unwesentlich verfälscht wird. Abhängig von der Anordnung in der Gesamtbox kann aber auch der Fluß durch den Nullfluß-Meßkanal in umgekehrter Richtung im Vergleich zu dem im Strömungskanal 1 erfolgen. Der Gasaustausch im Nullfluß-Meßkanal 11 ist in FIG 5 durch einen Pfeil angezeigt.

Die zuletzt beschriebene Ausführungsform läßt sich derart abwandeln, daß der Nullfluß-Meßkanal 11 nur an einer Stelle gegenüber der Umgebung innerhalb der Stahlbox offen ist, so daß der Austausch des Mediums, z.B. des Gases, lediglich durch Diffusion bestimmt ist. Die Öffnung ist hier, wie z.B. in FIG 6 dargestellt, auf der dem Ultraschallwandler 3,4 gegenüberliegenden Seite im Nullfluß-Meßkanal 11 vorgesehen, wie durch den Pfeil zeichnerisch angedeutet. Ansonsten ist dieser geschlossen.

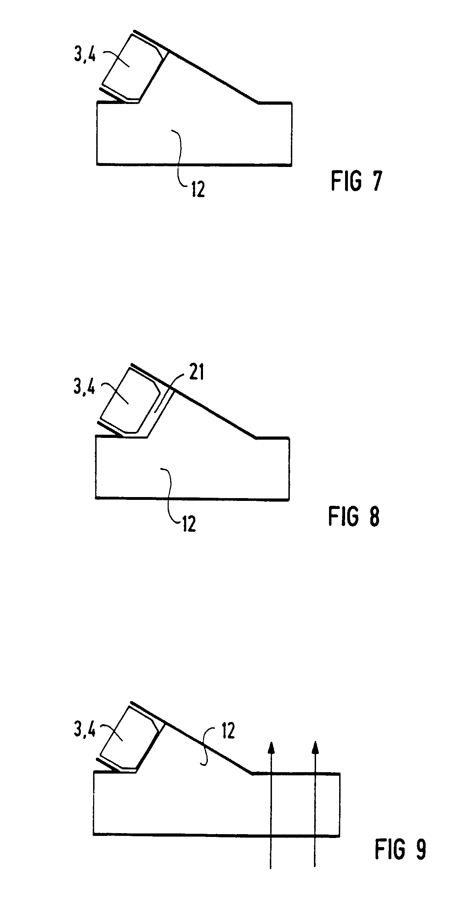

Bei einer weiteren Ausführungsform gemäß FIG 7 ist der Nullfluß-Meßkanal 11 vollständig geschlossen, d. h. auch im Bereich der Ultraschallwandler 3,4. Die Trennwand 12 zwischen beiden Kanälen 1,11 besteht hier aus einem porösen Material bzw. einer Membran, z.B. einer PTFE-Folie (Polytetrafluorethylen: Teflon®). Damit kann z.B. ein Gasaustausch sowohl durch Diffusion bei sehr geringen Durchflüssen als auch ein sehr geringer Fluß durch die Membran bei höheren Strömungsgeschwindigkeiten im Strömungskanal 1 erfolgen.

Eine Abwandlung der zuletzt genannten Ausführungsform besteht darin, daß nicht die gesamte Trennwand 12 zwischen beiden Kanälen 1,11 aus einer Membran besteht, sondern nur ein relativ kleiner Bereich 21, der gleichzeitig beide Kanäle 1,11 an den Ultraschallwandlern 3,4 voneinander trennt (FIG 8). Hierdurch ergibt sich als Vorteil, daß eine mögliche Körperschalleinkopplung durch die Verwendung des porösen Materials verringert wird.

Gegenüber der Ausführungsform gemäß FIG 5 ist es weiterhin möglich, daß die Öffnungen im Nullfluß-Meßkanal 11 nicht stromauf und stromab bezüglich des Strömungsmeßkanals 1 angeordnet sind. Sie können vielmehr in der Weise angeordnet sein, daß der Nullfluß-Meßkanal 11 von oben nach unten oder umgekehrt (FIG 9), d.h. also rechtwinklig zur Durchschallungsrichtung bzw. zur Flußrichtung im Strömungskanal 1, durchströmt wird, wie durch die Pfeile zeichnerisch angedeutet. Dies läßt sich durch geeignete konstruktive Maßnahmen in der Stahlbox erreichen. Der Fluß wird dabei so eingestellt, daß einerseits ein schneller Austausch des Mediums erfolgt und andrerseits die Messung des Nullflusses im Nullfluß-Meßkanal 11 nicht gestört wird. Der große Vorteil dieser Anordnung besteht darin, daß die Strömung z.B. bei einem Gasaustausch rechtwinklig zur Durchschallung erfolgt. Damit ist aber eine strömungsgeschwindigkeitsabhängige Differenz der Laufzeiten durch die Strömung ausgeschlossen.

Durch den Nullfluß-Meßkanal 11 und den seitlichen Versatz der Ultraschallwandler 3,4 könnte die Durchschallung des Strömungskanals 1 möglicherweise etwas beeinträchtigt werden und Probleme hinsichtlich der Pegel und Linearität nachsichziehen. Dem kann dadurch begegnet werden, daß Ultraschallwandler mit relativ großem Durchmesser verwendet werden. Bei Ultraschallwandlern für Gas, bei denen der Radialmode für die Ultraschall-Strömungsmessung verwendet wird, bedeutet dies neben einer größeren Kapazität bei gleicher Dicke der Ultraschallwandler eine niedrigere Trägerfrequenz. Da die Schalldämpfung in Gas frequenzabhängig ist, kann hiermit auch eine Verbesserung des Übertragungsmaßes erreicht werden. Weiterhin kann auch eine Verbesserung der Übertragung in hochdämpfenden Gasen, wie Methan, erreicht werden.

Im folgenden sollen anhand eines Zahlenbeispiels die zu erwartenden Meßdaten bei einem erfindungsgemäßen Durchflußmesser wiedergegeben werden. Dabei wird für den W-förmigen Ultraschallweg 2 eine Länge von 222 mm und für den Ultraschallweg 13 im Nullfluß-Meßkanal 11 eine Länge von 170 mm angenommen. Damit ergeben sich für Luft Ultraschall-Laufzeiten von 653 µsek und 500 µsek, d.h. die Separationszeit T3 ergibt sich zu 153 µsek. Für Methan, in dem sich der Ultraschall sehr viel schneller (c = 430 m/sek) ausbreitet, ergeben sich Ultraschall-Laufzeiten von 516 µsek und 395 µsek, d.h. es ergibt sich eine Separationszeit T3 von 121 µsek.

Unter der Annahme, daß der Querschnitt des Nullfluß-Meßkanals 11 etwa 5 x 5 mm$^2$ beträgt und daß 1 % des Durchflusses durch den Strömungskanal 1 durch den Nullfluß-Meßkanal 11 fließt, kann bei der oben erwähnten Anordnung gemäß FIG 4 ein Gasaustausch im Nullfluß-Meßkanal 11 selbst bei minimalem Durchfluß von 40 l/h in ca. 38 sek erreicht werden.

Hieraus wird deutlich, daß für die vorgeschlagenen Ausführungsformen bei entsprechend gewählten Abmessungen sich in der Praxis ausreichende Separationszeiten ergeben und ferner die Dauer des Gasaustausches genügend klein gehalten werden kann.

**Patentansprüche**

1. Ultraschall-Durchflußmesser mit einem von einem Medium (m) durchströmbaren Strömungskanal (1) und mit zwei Ultraschall-Sende-/Empfangswandlern (3,4), die den Strömungskanal (1) entlang eines vorgegebenen ersten Ultraschallweges (2) abwechselnd mit einem Ultraschallsignal auf einem vorgegebenen Ultraschallweg (2) durchschallen, wobei zusätzlich ein Nullfluß-Meßkanal (11) mit einem zugeordneten Ultralschallweg (13) vorgesehen ist, und wobei jeder Ultraschall-Sende/Empfangswandler (3,4) den Strömungskanal (1) und den Nullfluß-Meßkanal (11) derart überdeckt, daß bei Durchschallung des Strömungskanals (1) mit dem Ultraschallsignal zugleich der Nullfluß-Meßkanal (11) durchschallt ist,
**dadurch gekennzeichnet,**
daß die beiden Ultraschallwege (2,13) voneinander separiert parallel geschaltet sind, wobei ein von einem UltraschallSende-/Empfangswandler (3,4) ausgesandtes Ultraschallsignal über beide Ultraschallwege (2,13) vom jeweils anderen Ultraschall-Sende-/Empfangswandler (3,4) empfangbar ist.

2. Ultraschall-Durchflußmesser nach Anspruch 1, **dadurch gekennzeichnet,** daß die Ultraschallwege (2,13) derart in ihrer Länge bemessen sind, daß der jeweils empfangende Ultraschall-Sende-/Empfangswandler (3 oder 4) die beiden im Strömungskanal (1) und im Nullfluß-Meßkanal (11) laufenden Ultraschallsignale nacheinander empfängt.

3. Ultraschall-Durchflußmesser nach Anspruch 2, **dadurch gekennzeichnet,** daß der im Strömungskanal (1) liegende Ultraschallweg (2) länger ist als der im Nullfluß-Meßkanal (11) liegende Strömungsweg (13).

4. Ultraschall-Durchflußmesser nach Anspruch 3, **dadurch gekennzeichnet,** daß der Ultraschallweg (2) im Strömungskanal (1) W-förmig verläuft, und daß der Ultraschallweg (13) im Nullfluß-Meßkanal (11) im wesentlchen direkt und geradlinig verläuft.

5. Ultraschall-Durchflußmesser nach einem der vorangehenden Ansprüche, **dadurch gekennzeichnet,** daß der Strömungskanal (1) und der Nullfluß-Meßkanal (11) durch eine gemeinsame Trennwand (12) voneinander getrennt sind.

6. Ultraschall-Durchflußmesser nach Anspruch 5,
**dadurch gekennzeichnet,**
daß nur im Bereich der Ultraschall-Sende-/Empfangswandler (3,4) für das Medium (m) eine Durchlässigkeit zwischen dem Strömungskanal (1) und dem Nullfluß-Meßkanal (11) in der Trennwand (12) besteht.

7. Ultraschall-Durchflußmesser nach einem der vorangehenden Ansprüche, **dadurch gekennzeichnet,** daß der Nullfluß-Meßkanal (11) dicht ist, wobei aber ein Übergang von Medium zwischen dem Strömungskanal (1) und dem Nullfluß-Meßkanal (11) durch Diffusion erfolgen kann.

8. Ultraschall-Durchflußmesser nach einem der vorangehenden Ansprüche, **dadurch gekennzeichnet,** daß der Strömungskanal (1) und der Nullfluß-Meßkanal (11) an den Ultraschall-Sende-/Empfangswandlern (3,4) voneinander getrennt sind, daß die beiden Kanäle (1,11) in einer mit dem Medium (m) gefüllten Box eingeschlossen sind, und daß der Nullfluß-Meßkanal (11) gegenüber der Umgebung stromauf und stromab in bezug auf die Strömungsrichtung des Mediums (m) im Strömungskanal (1) offen ist.

9. Ultraschall-Durchflußmesser nach Anspruch 8, **dadurch gekennzeichnet,** daß der Nullfluß-Meßkanal (11) nur an einer Stelle gegenüber der Umgebung offen ist.

10. Ultraschall-Durchflußmesser nach einem der vorangehenden Ansprüche in Verbindung mit Anspruch 6, **dadurch gekennzeichnet,** daß der Nullfluß-Meßkanal (11) vollständig gegenüber der Umgebung geschlossen ist, und daß die Trennwand (12) zwischen beiden Kanälen (1,11) zumindest teilweise aus porösem Material oder aus einer Membran besteht.

11. Ultraschall-Durchflußmesser nach einem der vorangehenden Ansprüche in Verbindung mit Anspruch 5, **dadurch gekennzeichnet,** daß die Trennwand (12) im Bereich der Ultraschall-Sende-/Empfangswandler (3,4) aus einer Membran besteht.

12. Ultraschall-Durchflußmesser nach einem der vorangehenden Ansprüche, **dadurch gekennzeichnet,** daß im Nullfluß-Meßkanal (11) mindestens eine Öffnung (15) derart angeordnet ist, daß der Nullfluß-Meßkanal (11) vom Medium (m) quer zur Ultraschall führung im Nullfluß-Meßkanal (11) durchströmt wird.

13. Ultraschall-Durchflußmesser nach einem der vorangehenden Ansprüche, **dadurch gekennzeichnet,** daß die Ultraschall-Sende-/Empfangswandler (3,4) wechselweise im Sende- und Empfangsbetrieb arbeiten.

14. Ultraschall-Durchflußmesser nach einem der vorangehenden Ansprüche, **dadurch gekennzeichnet,** daß der Nullfluß-Meßkanal (11) mit dem gleichen Medium (m) wie der Strömungskanal (1) gefüllt ist.

15. Ultraschall-Durchflußmesser nach einem der Ansprüche 1 bis 5 und/oder 13, **dadurch gekennzeichnet,** daß der Nullfluß-Meßkanal (11) mit einem anderen Medium als der Strömungskanal (1) gefüllt ist.

16. Ultraschall-Durchflußmesser nach einem der vorangehenden Ansprüche, **dadurch gekennzeichnet,** daß das Medium (m) im Nullfluß-Meßkanal (11) praktisch ruht.

17. Ultraschall-Durchflußmesser nach einem der vorangehenden Ansprüche, **dadurch gekennzeichnet,** daß das Medium (m) ein Gas oder eine Flüssigkeit ist.

18. Verfahren zur Ultraschall-Durchflußmessung, bei dem ein von einem Medium (m) durchströmter Strömungskanal (1) entlang eines ersten Ultraschallweges (2) und ein Nullfluß-Meßkanal (11) entlang eines zweiten Ultraschallweges (2) von Ultraschall-Sende-/Empfangswandlern (3,4) durchschallt werden, wobei der jeweils sendende Ultraschall-Sende-/Empfangswandler (3 oder 4) beide Kanäle (1, 11) gleichzeitig durchschallt,
**dadurch gekennzeichnet,** daß der dann empfangende andere Ultraschall-Sende-/Empfangswandler (4 oder 3) die sich in beiden Kanälen (1,11) entlang der beiden Ultraschallwege (2,13) separat voneinander ausbreitenden Ultraschallsignale empfängt.

19. Verfahren nach Anspruch 20,
**dadurch gekennzeichnet,** daß in einem der Kanäle (1 oder 11) das Ultraschallsignal mehrfach reflektiert und dadurch der zugehörige Ultraschallweg (2,13) verlängert wird.

20. Verfahren nach Anspruch 19 oder 20,
**dadurch gekennzeichnet,** daß der jeweils empfangende Ultraschall-Sende-/Empfangswandler (4) die sich in den Kanälen (1,11) ausbreitenden Ultraschallsignale nacheinander empfängt.

**Claims**

1. Ultrasonic flow meter having a flow channel (1), through which a medium (m) can flow, and having two ultrasonic transmitting/receiving transducers (3, 4) which, in an alternating manner, ultrasonically test the flow channel (1) along a specified first ultrasonic path (2) with an ultrasonic signal on a specified ultrasonic path (2), with there being additionally provided a zero flow measuring channel (11) having an associated ultrasonic path (13), and with each ultrasonic transmitting/receiving transducer (3, 4) covering the flow channel (1) and the zero flow measuring channel (11) in such a way that during the ultrasonic testing of the flow channel (1) with the ultrasonic signal, the zero flow measuring channel (11) is simultaneously ultrasonically tested, characterised in that the two ultrasonic paths (2, 13) are connected in parallel in a manner such that they are separated from each other, with an ultrasonic signal emitted by an ultrasonic transmitting/receiving transducer (3,4) over both ultrasonic paths (2, 13) being receivable by the other transmitting/receiving transducer (3, 4) in each case.

2. Ultrasonic flow meter according to claim 1, characterised in that the ultrasonic paths (2, 13) are dimensioned in terms of their length in such a way that the ultrasonic transmitting/receiving transducer (3 or 4) which receives in each case receives one after the other the two ultrasonic signals which run in the flow channel (1) and in the zero flow measuring channel (11).

3. Ultrasonic flow meter according to claim 2, characterised in that the ultrasonic path (2) which lies in the flow channel (1) is longer than the flow path (13) which lies in the zero flow measuring channel (11).

4. Ultrasonic flow meter according to claim 3, characterised in that the ultrasonic path (2) in the flow channel (1) extends in a W-shaped manner, and in that the ultrasonic path (13) in the zero flow measuring channel (11) extends substantially directly and in a straight line.

5. Ultrasonic flow meter according to one of the preceding claims, characterised in that the flow channel (1) and the zero flow measuring channel (11) are separated from each other by a common partition (12).

6. Ultrasonic flow meter according to claim 5, characterised in that only in the region of the ultrasonic transmitting/receiving transducers (3, 4) is there a permeability between the flow channel (1) and the zero flow measuring channel (11) in the partition (12) for the medium (m).

7. Ultrasonic flow meter according to one of the preceding claims, characterised in that the zero flow measuring channel (11) is impervious, in which case, however, a passing over of medium between the flow channel (1) and the zero flow measuring channel (11) can take place by diffusion.

8. Ultrasonic flow meter according to one of the preceding claims, characterised in that the flow channel (1) and the zero flow measuring channel (11) are separated from each other at the ultrasonic transmitting/receiving transducers (3, 4), in that the two channels (1, 11) are enclosed in a box which is filled with the medium (m), and in that the zero flow measuring channel (11) is open with respect to the surroundings upstream and downstream in relation to the direction of flow of the medium (m) in the flow channel (1).

9. Ultrasonic flow meter according to claim 8, characterised in that the zero flow measuring channel (11) is open with respect to the surroundings at only one point.

10. Ultrasonic flow meter according to one of the preceding claims in connection with claim 6, characterised in that the zero flow measuring channel (11) is completely closed with respect to the surroundings, and in that the partition (12) between the two channels (1, 11) consists at least partially of a porous material or of a membrane.

11. Ultrasonic flow meter according to one of the preceding claims in connection with claim 5, characterised in that in the region of the ultrasonic transmitting/receiving transducers (3, 4), the partition (12) consists of a membrane.

12. Ultrasonic flow meter according to one of the preceding claims, characterised in that at least one opening (15) is arranged in the zero flow measuring channel (11) in such a way that the medium (m) flows through the zero flow measuring channel (11) at right angles to the ultrasonic guiding in the zero flow measuring channel (11).

13. Ultrasonic flow meter according to one of the preceding claims, characterised in that the ultrasonic transmitting/receiving transducers (3, 4) work alternately in the transmitting mode and receiving mode.

14. Ultrasonic flow meter according to one of the preceding claims, characterised in that the zero flow measuring channel (11) is filled with the same medium (m) as the flow channel (1).

15. Ultrasonic flow meter according to one of the claims 1 to 5 and/or 13, characterised in that the zero flow measuring channel (11) is filled with a different medium to the flow channel (1).

16. Ultrasonic flow meter according to one of the preceding claims, characterised in that the medium (m) in the zero flow measuring channel (11) is practically static.

17. Ultrasonic flow meter according to one of the preceding claims, characterised in that the medium (m) is a gas or a liquid.

18. Method for ultrasonic flow measurement, in which a flow channel (1), through which a medium (m) flows, is ultrasonically tested along a first ultrasonic path (2) and a zero flow measuring channel (11) is ultrasonically tested along a second ultrasonic path (2 (sic)) by ultrasonic transmitting/receiving transducers (3, 4), with the ultrasonic transmitting/receiving transducer (3 or 4) which transmits in each case ultrasonically testing both channels (1, 11) simultaneously, characterised in that the other ultrasonic transmitting/receiving transducer (4 or 3), which then receives, receives the ultrasonic signals which propagate separately from each other in the two channels (1, 11) along the two ultrasonic paths (2, 13).

19. Method according to claim 20, characterised in that in one of the channels (1 or 11), the ultrasonic signal is reflected a plurality of times and as a result of this the associated ultrasonic path (2, 13) is extended.

20. Method according to claim 19 or 20, characterised in that the ultrasonic transmitting/receiving transducer (4) which receives in each case receives one after the other the ultrasonic signals which propagate in the channels (1, 11).

**Revendications**

1. Débitmètre aux ultrasons, comprenant un canal (1) d'écoulement dans lequel peut passer un fluide (m), et comprenant deux transducteurs (3, 4) ultrasonores d'émission/réception, qui exposent alternativement le canal (1) d'écoulement, le long d'un premier parcours (2) ultrasonore prescrit, à un signal ultrasonore sur un parcours (2) ultrasonore prescrit, et il est en outre prévu un canal (11) de mesure à écoulement zéro, auquel est associé un parcours (13) ultrasonore, et chaque transducteur (3, 4) ultrasonore d'émission/réception couvrant le canal (1) d'écoulement et le canal (11) de mesure à écoulement zéro de telle sorte que, lors de l'exposition du canal (1) d'écoulement au signal ultrasonore, le canal (11) de mesure à écoulement zéro est en même temps exposé,
**caractérisé** en ce que les deux parcours (2, 13) ultrasonores sont disposés en parallèle en étant séparés l'un de l'autre, un signal ultrasonore émis par un transducteur (3, 4) ultrasonore d'émission/réception pouvant être reçu par l'autre transducteur (3, 4) ultrasonore respectif d'émission/réception par l'intermédiaire des deux parcours (2, 13) ultrasonores.

2. Débitmètre aux ultrasons suivant la revendication 1, **caractérisé** en ce que les parcours (2, 13) ultrasonores sont prévus d'une longueur telle que le transducteur (3 ou 4) ultrasonore d'émission/réception récepteur reçoit successivement les deux signaux ultrasonores passant dans le canal (1) d'écoulement et dans le canal (11) de mesure à écoulement zéro.

3. Débitmètre aux ultrasons suivant la revendication 2, **caractérisé** en ce que le parcours (2) ultrasonore situé dans le canal (1) d'écoulement est plus long que le parcours (13) ultrasonore situé dans le canal (11) de mesure à écoulement zéro.

4. Débitmètre aux ultrasons suivant la revendication 3, **caractérisé** en ce que le parcours (2) ultrasonore dans le canal (1) d'écoulement s'étend en forme de W, et en ce que le parcours (13) ultrasonore dans le canal (11) de mesure à écoulement zéro s'étend sensiblement directement et de façon rectiligne.

5. Débitmètre aux ultrasons suivant l'une des revendications précédentes, **caractérisé** en ce que le canal (1) d'écoulement et le canal (11) de mesure à écoulement zéro sont séparés l'un de l'autre par une cloison (12) séparatrice commune.

6. Débitmètre aux ultrasons suivant la revendication 5, **caractérisé** en ce qu'il existe, dans la cloison (12) séparatrice. une possibilité de passage de fluide (m) entre le canal (1) d'écoulement et le canal (11) de mesure à écoulement zéro uniquement dans la région des transducteurs (3, 4) ultrasonores d'émission/réception.

7. Débitmètre aux ultrasons suivant l'une des revendications précédentes, **caractérisé** en ce que le canal (11) de mesure à écoulement zéro est étanche, un passage de fluide entre le canal (1) d'écoulement et le canal (11) de mesure à écoulement zéro pouvant cependant s'effectuer par diffusion.

8. Débitmètre aux ultrasons suivant l'une des revendications précédentes, **caractérisé** en ce que le canal (1) d'écoulement et le canal (11) de mesure à écoulement zéro sont séparés l'un de l'autre au niveau des transducteurs (3, 4) ultrasonores d'émission/réception, en ce que les deux canaux (1, 11) sont enfermés dans un caisson rempli du fluide (m), et en ce que le canal (11) de mesure à écoulement zéro est ouvert vers l'extérieur en amont et en aval par rapport à la direction d'écoulement du fluide (m) dans le canal (1) d'écoulement.

9. Débitmètre aux ultrasons suivant la revendication 8. **caractérisé** en ce que le canal (11) de mesure à écoulement zéro n'est ouvert vers l'extérieur qu'en un endroit.

10. Débitmètre aux ultrasons suivant l'une des revendications précédentes conjointement avec la revendication 6, **caractérisé** en ce que le canal (11) de mesure à écoulement zéro est entièrement fermé vis-à-vis de l'extérieur, et en ce que la cloison (12) séparatrice entre les deux canaux (1. 11) est, au moins partiellement, réalisée en matériau poreux ou constituée d'une membrane.

11. Débitmètre aux ultrasons suivant l'une des revendications précédentes conjointement avec la revendication 5, **caractérisé** en ce que la cloison (12) séparatrice est constituée d'une membrane dans la région des transducteurs (3, 4) ultrasonores d'émission/réception.

12. Débitmètre aux ultrasons suivant l'une des revendications précédentes, **caractérisé** en ce qu'au moins une ouverture (15) est disposée dans le canal (11) de mesure à écoulement zéro de telle sorte que le fluide (m) passe dans le canal (11) de mesure à écoulement zéro transversalement au guidage des ultrasons dans le canal (11) de mesure à écoulement zéro.

13. Débitmètre aux ultrasons suivant l'une des revendications précédentes, **caractérisé** en ce que les transducteurs (3. 4) ultrasonores d'émission/réception fonctionnent alternativement en émission et en réception

14. Débitmètre aux ultrasons suivant l'une des revendications précédentes, **caractérisé** en ce que le canal (11) de mesure à écoulement zéro est rempli du même fluide (m) que le canal (1) d'écoulement.

15. Débitmètre aux ultrasons suivant l'une des revendications 1 à 5 et/ou 13, **caractérisé** en ce que le canal (11) de mesure à écoulement zéro est rempli d'un autre fluide que le canal (1) d'écoulement.

16. Débitmètre aux ultrasons suivant l'une des revendications précédentes, **caractérisé** en ce que le fluide (m) est pratiquement stagnant dans le canal (11) de mesure à écoulement zéro.

17. Débitmètre aux ultrasons suivant l'une des revendications précédentes, **caractérisé** en ce que le fluide (m) est un gaz ou un liquide.

**18.** Procédé de mesure de débit par ultrasons, selon lequel des transducteurs (3, 4) ultrasonores d'émission/réception exposent aux ultrasons un canal (1) d'écoulement, dans lequel passe un fluide (m), le long d'un premier parcours (2) ultrasonore, et un canal (11) de mesure à écoulement zéro le long d'un second parcours (13) ultrasonore, le transducteur (3 ou 4) ultrasonore d'émission/réception respectivement émetteur exposant simultanément aux ultrasons les deux canaux (1, 11),
**caractérisé** en ce que l'autre transducteur (4 ou 3) ultrasonore d'émission/réception, alors récepteur, reçoit les signaux ultrasonores qui se propagent séparément l'un de l'autre dans les deux canaux (1, 11) le long des deux parcours (2, 13) ultrasonores.

**19.** Procédé suivant la revendication 18, **caractérisé** en ce que le signal ultrasonore est plusieurs fois réfléchi dans un des canaux (1 ou 11), de sorte que le parcours (2, 13) ultrasonore associé est rendu plus long.

**20.** Procédé suivant la revendication 18 ou 19, **caractérisé** en ce que le transducteur (4) ultrasonore d'émission/réception respectivement récepteur reçoit successivement les signaux ultrasonores qui se propagent dans les canaux (1, 11).

FIG 1

FIG 2

FIG 3

3,4 — 14

12

FIG 4

3,4 — 12

FIG 5

3,4 — 12

FIG 6

13

3,4

12

FIG 7

3,4

21

12

FIG 8

3,4

12

FIG 9

FIG 10